# EUROPEAN PATENT SPECIFICATION

(11) **EP 2 725 917 B1**
(45) Date of publication and mention of the grant of the patent: **13.04.2016**
(21) Application number: 12738644.9
(22) Date of filing: 29.06.2012
(51) Int. Cl.: A23C 11/00, A23L 23/10

(54) **ACID-STABLE CREAMER OR WHITENER COMPOSITION**
SÄURESTABILE KAFFEESAHNE- ODER KAFFEEWEISSERZUSAMMENSETZUNG
COMPOSITION DE CRÈME OU DE BLANCHISSEUR STABLE AUX ACIDES

(30) Priority: 01.07.2011 NL 2007033
(43) Date of publication of application: 07.05.2014
(73) Proprietor: FrieslandCampina Nederland B.V., 3818 LE Amersfoort (NL)
(72) Inventor: Kloek, William, NL-5467 BR Veghel (NL); Valkanotska, Olena, NL-6717 ZG Ede (NL)
(74) Representative: Nederlandsch Octrooibureau
(86) International application number: PCT/NL2012/050462
(87) International publication number: WO 2013/006045

(56) References cited:
- US-A- 3 560 220
- US-A- 5 721 003
- US-B1- 6 168 819
- US-B1- 6 743 945

## Description

### FIELD OF THE INVENTION

The present invention relates to a particulate spray-dried creamer, or whitener composition that is stable towards acid (i.e. below pH 7, preferably below pH 6.5, more preferably below pH 6.0), and to the preparation and use thereof.

### BACKGROUND OF THE INVENTION

Powdered creamers and whiteners, dairy as well as non-dairy, are well known in the art and have been widely used for many years. Typical ingredients for powdered creamers and whiteners are skimmed milk, (milk) proteins, lipids, carbohydrates, stabilizers, emulsifiers and free-flowing agents. Examples of such compositions are beverage creamers for e.g. coffee or tea, also known as coffee or tea whiteners, as well as high-fat particulate soup- and sauce whiteners to render soups and sauces a creamy appearance and mouthfeel. Often these creamers and whiteners comprise milk protein (casein).

When used in acidic (and hot) environments such as tomato soup or coffee, milk protein-based creamers and whitener powders may suffer from curdling, also referred to as "feathering", caused by aggregation and precipitation of casein. To this end, inorganic phosphates (e. g. dipotassium phosphate) are often added, which act as a buffer in acidic food applications. These phosphates are classified as E-numbers.

However, in line with the general trend to reduce E-numbers in food, there is a desire to eliminate also phosphate from food products. Hence, from a consumer's perspective, there is a need in the art to provide fat powders containing little to no artificial ingredients ('E-numbers'), such as inorganic phosphates. In addition, inorganic phosphate is also disfavored in processing. Firstly, it is known to cause lumping due to its hygroscopic properties. Manufacture of a fat- and protein containing powder involves transport of the powder by means of a screw or a vibrating tube during processing. Here, the humidity of the air already gives rise to problems; powder becomes sticky, and the problem accumulates with subsequent batches. WO 2010/068093 A1 has tackled these problems using phosphopeptides, preferably comprising casein phosphopeptides (CPP). Although such formula proved successful in many conditions, it is found that there is still room for improvement when facing acidic conditions.

US 5,721,003 relates to foaming conventional coffee and cappuccino creamers, which do not require incorporation of a gas for creating foam, and which do not suffer from aggregation in hot liquids. Like all other conventional creamers, the compositions described in US 5,721,003 comprise dairy or non-dairy creamer components, as well as a foam generating compound comprising glucono-delta-lactone (GDL) and an alkali metal carbonate or bicarbonate. No actual creamer recipes are disclosed.

WO 2006/036059 discloses a creamer that is less sensitive to acid and hard water, using a protein-carbohydrate conjugate. In view of sedimentation of proteins in acidic environment, WO2009/068544 suggests a protein-free creamer composition comprising an emulsifying component of at least two low molecular weight emulsifiers, a cellulose component including a blend of microcrystalline cellulose and carboxymethylcellulose and a carrageenan gum component. US 6,759,078 discloses an aseptic cream substitute comprising a composition of water, a dry blend, and a meltable oil or fat, wherein the dry blend comprises microparticulated and denatured whey protein concentrate and xanthan gum, wherein the composition is pasteurized and then homogenized to produce the aseptic cream substitute. In EP1042960 a low-fat cappuccino-foaming creamer is described comprising protein, wherein more than 50% by weight of said protein is whey protein that is from 40 to 90% denatured, and further comprising (basic) chemical carbonation reagents. The contents of these documents are considered incorporated by reference.

Outside the field of hot liquid applications such as creamers and whiteners, US 3,560,220 discloses a dried product for reconstitution to furnish a baking ingredient, garnish, topping and dressing, especially of the sour cream type. Acid-stability in a hot liquid is not addressed. The dried powder is reconstituted by beating with an aqueous liquid such as milk, water and/or cream to form a product having the taste and texture of sour cream. It seeks a solution for instability issues between whey and casein in those reconstituted products in which casein is abundantly present.

There is an ongoing need in the art to provide creamers and whiteners that are stable towards acid, i.e. that do not suffer from curdling or feathering in acidic foodstuffs, in particular at elevated temperatures. It is another object to provide acid-stable creamers and whiteners that do not contain inorganic phosphates. It is a further object to provide creamer and whitener compositions that are fully dairy-based, i.e. which contain no fats, proteins and carbohydrates and other ingredients that are not derived from dairy.

### SUMMARY OF THE INVENTION

The inventors now make it possible to manufacture spray-dried fat and protein-containing powders suitable for use as creamers and whiteners without the need for added inorganic phosphates, and yet do not suffer from curdling in acid environments. The solution provided by the inventors is to use an acidulant in manufacturing and mild processing temperatures and pressures during manufacturing. The particulate composition of the invention shows excellent whitening and creaming power of acid food products while displaying no feathering. Surprisingly, the creamer of whitener product has been found to be stable even in acid-containing liquids and near the boiling point of said liquids. The results have been included in the experimental section.

The inventors have succeeded in devising a new process for the preparation of a particulate creamer or whitener composition, said process involving preparing (in the absence of excessive heating) an emulsion or dispersion comprising fat and whey protein, acidification of said emulsion or dispersion, and homogenization and spray-drying said acidified emulsion/dispersion under mild temperature, shear and pressure conditions, yielding a particulate creamer or whitener composition having the unique properties as described above. Digressing from the homogenization and spray-drying methods generally applied in this field, the present invention uses low temperatures and (homogenization and nozzle) pressures during these cycles, thereby avoiding shear-induced destruction of the acidified emulsion/dispersion.

Without wishing to be bound to theory, it is the belief of the inventors that the specific combination of whey protein and acidulant and the application of controlled homogenization and spray-drying conditions render the resultant creamer/whitener more stable towards aggregation and/or precipitation during processing and subsequent incorporation in acidic and optionally hot foodstuffs.

It was furthermore found that within the temperature and pressure limits for homogenization set by the present invention, there is an optimal pH range for stabilizing the protein covered emulsion droplets in the preparation of the creamer/whitener particles of the invention, thereby avoiding excessive aggregation and/or precipitation.

### DETAILED DESCRIPTION OF THE INVENTION

In one aspect, the invention thus pertains to a particulate creamer or whitener composition, wherein the particles comprise fat, carbohydrate, whey protein and an acidulant, and wherein, if reconstituted in demineralized water, a 10 % (w/w) dispersion or solution of said composition in demineralized water has a pH between 3.5 and 6.0.

With the phrase "fat, carbohydrate, whey protein and an acidulant" it is meant that the composition may comprise one or more different fats, one or more different carbohydrates, one or more different proteins, and one or more different acidulants.

Preferably, the particulate creamer or whitener composition predominantly contains, i.e. at least 50 wt%, preferably at least 80 wt%, dairy-derived ingredients. "Dairy-derived ingredients" are understood to comprise milk fat (including butterfat), lactose, casein, whey protein and whey protein derivatives (concentrates, isolates and hydrolysates), lactic acid and citric acid. These dairy components may be applied in the compositions according to the invention as such, but it is not meant to exclude any dairy ingredients that have been subjected to some kind of processing steps such as isolation or heat treatment first.

In a preferred embodiment, the composition contains less than 2 wt%, preferably less than 1 wt%, more preferably less than 0.5 wt% in total, based on total weight of the composition, of fats, carbohydrates and proteins that cannot be derived from dairy sources. In one embodiment, the fat, protein and carbohydrate components of the creamers or whitener powder of the invention is fully dairy-based, i.e. the product does not contain any fat, protein, acid or carbohydrate components that cannot be derived from non-dairy sources. In such case, the composition may advantageously be labeled as "all dairy" composition.

In a preferred embodiment of the invention, the particulate creamer or whitener composition comprises milk fat as fat source, lactose as carbohydrate source and whey protein as protein source. In another preferred embodiment, the particulate creamer or whitener composition comprises milk fat or butter fat as the only fat source, lactose as the only carbohydrate source and whey protein as the only protein source. Such compositions exclude the use of vegetable fats (e.g. palm oil, palm kernel oil, coconut oil), pea or soy proteins

### Creamer or whitener

With the term "particulate creamer or whitener composition", instant particulate compositions are meant that are to be reconstituted in a range of liquid or pasty, preferably water- or milk-based, food applications that are consumed as a liquid or semi-liquid. Preferably, the particulate composition is reconstituted by the end-consumer. In one preferred one embodiment, the particulate material is mixed with a dry particulate savory food composition, such as an instant soup powder, and packaged for sale to the end-consumer.

Within the context of the present invention, "particulate" is understood to mean powders, agglomerates, flakes, cubes, pellets, etc., i.e. in a non-liquid state. The moisture content, i.e. water content, of the particulate foamer or whitener composition is preferably below 5 wt%, more preferably below 4 wt%, more preferably below 3 wt%, most preferably below 2 wt%, based on the total weight of the particulate composition. It is preferably a water-soluble instant powder. Customary in the art, the particulate material may be characterized by its tapped or poured bulk density.

For the purpose of the invention, the preferred food applications are of the liquid savoury type, e.g. soups and sauces. Other typical examples of food applications are beverages such as coffee and tea, etc. Such food applications may be characterized by being relatively acidic, i.e..having a pH in the range of 3.0-7.0, more preferably 3.5-5.0. The particulate composition is preferably a matrix containing at least protein, fat, and carbohydrate. The actual amounts of fat, protein and carbohydrates in such a composition, and incorporation of other ingredients (and amounts thereof) are determined by the application. However, these applications all have in common that the preparation of the foodstuff or beverage involves a step of contacting the fat-containing powder with a liquid, i.e. water and/or milk, here below and in the field referred to as 'reconstitution'.

### Acidulants

In one embodiment, the invention encompasses the use of an acidulant in the spray-dried particulate creamer or whitener product. There is no limitation with respect to the type of acidulant employed in this invention other than that the acidulant is suitable for human consumption (i.e. 'food-grade acidulant'). Typical examples of acidulants that may be used in this invention include, without limitation, citric acid, lactic acid, ascorbic acid, tartaric acid, hydrochloric acid, sulphuric acid, acetic acid, malic acid, fumaric acid, glucono-delta-lactone, and mixtures thereof. In a preferred embodiment, the acidulant employed in this invention is lactic acid or citric acid or a combination thereof, as these can both be derived from dairy products. In one preferred embodiment, the acidulant is lactic acid, as this has a pleasant soft taste or acid perception.

The acidulant-containing particulate creamer or whitener composition of the invention can be distinguished from compositions known in the art by their acidic pH - compared to neutral to basic pH values for known creamers/whiteners - when dissolved or dispersed in an aqueous liquid. The application of acids and acidic pHs in the manufacturing of creamers and whiteners, including the incorporation of acidulants in these compositions, has hitherto been avoided in the art, or otherwise counteracted by the use of phosphate additives. The underlying reason for the use of neutral to basic pH values in known creamers/whiteners is the prevention of the excessive acid-induced aggregation and/or precipitation of caseins and/or caseinates in such compositions.

The acidity of the particulate composition of the invention can be assessed by preparing a 10 % (w/w) dispersion or solution of the composition in demineralized water, which should have a pH between 3.5 and 6.0, more preferably between 3.9 and 5.9, even more preferably between 4.7-5.7, most preferably between 5.0 - 5.4. In testing the pH of the solubilized composition of the invention, demineralized water is used to avoid the occurrence of artifacts due to variations in tap water compositions, in particular the presence of dissolved ions, such as hard water Ca²⁺ and Mg²⁺ ions. In the context of the present invention, the term "demineralized water" has its ordinary meaning from the art, i.e. relates to water that has had its mineral ions for the greater part removed. In this context, "deionized water" and "distilled water" are also considered to fall under the definition of demineralized water, provided that it relates to water having a electrical conductivity that is less than 2 mS/m, preferably less than 0,1 mS/cm.

### Protein

Also essential for obtaining the benefits of the invention is that the creamer or whitener particles comprise whey protein. The creamer or whitener particles preferably comprise 2-12 wt% whey protein, more preferably 5-10 wt% whey protein. Typical whey protein sources are demineralised and/or delactosed whey powder, whey protein concentrate (WPC), preferably a WPC selected from WPC 30, WPC 35, WPC 60 or WPC 80; and whey protein isolate (WPI, having a protein purity of more than 90 % w/w).

The creamer or whitener particles may comprise other proteins than whey protein, including casein or caseinate (including sodium and/or potassium caseinate); soy proteins, e.g. soy protein isolates and/or soy protein concentrates; wheat protein, especially soluble wheat gluten; egg proteins, preferably egg white protein or egg white albumin; pea protein or milk protein concentrate (MPC), or mixtures thereof. However, it is preferred that these other protein sources do not make up more than 20 wt%, by total weight of the protein fraction, of the protein fraction of the creamer or whitener particulates. The total weight of the protein fraction (whey protein and optional other proteins) is preferably 7-15 wt%, based on the total weight of the particulate composition. The creamer or whitener particles contain at most 10 wt%, more preferably at most 5 wt%, most preferably at most 1 wt%, by total weight of the protein fraction, of casein and/or caseinate, i.e. the combined weight of casein and caseinate. In one embodiment, the creamer or whitener particles contain whey protein as the only protein source.

### Fats

The creamer or whitener particles of the invention preferably contain between 10 - 75 wt%, based on total weight of the particulate composition, of fat, or a mixture of fats. "Fat" as used herein refers to triglycerides of fatty acids and mixtures thereof that are liquid or solid at room temperature. Suitable fats for use in the present invention include animal fats, such as milk fat, and vegetable oils, such as coconut oil, palm oil, palm kernel oil, sunflower oil, safflower oil, rapeseed oil, and soya oil, fractionated non-hydrogenated vegetable oils and mixtures thereof. Preferably, the milk fat is of bovine, caprine or ovine origin.

Within the context of the present invention, "milk fat" is understood to comprise (milk) cream, butterfat and/or or butter oil. In a preferred embodiment, a particulate creamer or whitener composition is provided wherein the particles comprise butterfat, in particular water-free butterfat. "Butterfat" also referred to as "(anhydrous) butter oil" or "(anhydrous) milk fat", refers to the dairy-based fat fraction obtained by removing the moisture and the non-fat milk solids from milk fat. "Water-free" or anhydrous butter fat contains less than 0.2 wt% of water. Butterfat mainly consists of a mixture of fatty acid triglycerides, containing about 65 wt% saturated fatty acids.

Depending on the envisaged application in foodstuffs, the amount of fat in the creamer/whitener particles may be adapted. For example, in coffee creamers/whiteners, the amount of fat is preferably 20-45 wt%, more preferably 25-35 wt%. When the creamer/whitener particles of the invention are applied in soups or sauces, the particles preferably contain higher amounts of fat, typically 35-75 wt%, more preferably 55-75 wt% of fat.

In a preferred embodiment of the invention, a particulate creamer or whitener composition suitable for use in soups or sauces is provided, wherein the particles comprise at least 50 wt% butterfat, preferably at least 60 wt% butterfat.

### Fat : whey protein ratio

It was discovered by the inventors that particular satisfactory whitening results and lack of undesired aggregation of the creamer/whitener particles are obtained if the fat: whey protein ratio in the particles is maintained within certain limits. It is preferred that the fat : whey protein ratio, based on weight, is larger than 6:1, preferably larger than 7:1, more preferably larger than 8:1, even more preferably larger than 9:1, yet even more preferably larger than 10:1, most preferably larger than 12:1. It is furthermore preferred that the fat: whey protein ratio, based on weight, is smaller than 15:1. The fat relates to all fat and/or oil present in the particulates.

Without wishing to be bound to theory, it is the inventor's belief that the relatively high amount of fat to whey protein makes that essentially all of the protein is absorbed on the fat/oil droplets, which makes the protein less available for acid- and heat-induced aggregation and concomitant feathering effects in foodstuffs.

It was furthermore observed that the visual appearance (whiteness) and taste (creaminess) of the composition of the invention when reconstituted in a liquid food composition, such as a soup or sauce, is improved if the amount of free fat, i.e. fat particles not covered by protein, is maintained within specific limits. Preferably, the amount of free fat in the particulates of the invention, based on total weight of the particulate composition, is between 10-50 wt%, more preferably between 10-40 wt%, most preferably between 10-30 wt%. Generally, the amount of free fat in the particulates of the invention is determined by extracting an amount with known weight of the creamer/whitener composition with a solvent (petroleum ether) and relating the weight of the extracted fat after evaporation of the solvent to the weight of the original particulates. A detailed experimental description is provided in Example 2.

### Carbohydrate

The carbohydrate fraction of the creamer/whitener particulates of the invention, based on its total weight, is preferably between 25 and 75 wt%, more preferably between 30 and 70 wt%, most preferably at least 35 wt%, particularly at least 40 wt%, especially at least 45 wt%. The carbohydrates function as a filler and spray-drying aid, and may furthermore provide at least some sweetness to the application.

The carbohydrates may be selected from mono-, di-, oligo- or polysaccharides or mixtures of thereof. Suitable carbohydrates further comprise one or more of glucose, fructose, lactose, maltose, sucrose, invert sugar, maltodextrins (preferably having a DE value of 13 to 20), glucose syrup (preferably having a DE value of 20 to 47), inulin or oligofructose. In a preferred embodiment, the creamer or whitener particles comprise lactose. In one embodiment, the creamer or whitener particles comprise lactose as the only carbohydrate source. In such case, the creamer or whitener particles are preferably fully dairy-based, containing only whey protein (and optionally casein and/or caseinates) as the protein source and milk fat, preferably butterfat, as the predominant or even sole fat source.

However, it was found that too high amounts of lactose, i.e. higher than 35 wt% based on total dry particulate matter, may lead to unwanted crystallization of amorphous lactose. Accordingly, in a preferred embodiment the creamer or whitener particulate composition comprises no more than 35 wt% lactose, based on total dry weight. In such case, if higher total amounts of carbohydrates are desired in the creamer or whitener particles, it is desirable to use at least another carbohydrate source. For example, a combination of lactose and glucose syrup, can be applied.

It is further noted that some commercially available whey protein sources that may be used to prepare the spray-dried particles of the invention may also contain lactose. In such case, where reference is made to the carbohydrate content of the creamer/whitener particles, the content is intended to include all of the carbohydrate that is present in the creamer/whitener particulates, and not just the amount of separately added carbohydrate.

### Emulsifiers

In the art, whey proteins and derivatives thereof are regarded to possess emulsifying properties. It is preferred that the particulate creamer or whitener composition of the invention comprises little or no emulsifiers other than whey proteins. Preferably, the particles comprise less than 1 wt%, more preferably less than 0.5 wt%, even more preferably less than 0.1 wt%, based on dry weight, of emulsifiers other than whey proteins. Such emulsifiers are meant to include compounds commonly added to creamers and whiteners, such as modified starches, surfactants or mono- and diglycerides of fatty acids. In a preferred embodiment, the particulate creamer or whitener composition of the invention contains no emulsifiers other than whey proteins.

### Gelling agents, thickeners, stabilizers

It is preferred that the particulate creamer or whitener composition according to the invention comprises less than 1 wt%, more preferably less than 0.5 wt%, even more preferably less than 0.1 wt%, based on dry weight on weight of the particulate composition, of gelling agents, thickeners and/or stabilizers, all percentages being based on the total amount of gelling agents, thickeners and stabilizers present in the composition. Within the context of the present invention, the terms "gelling agent", "thickener and "stabilizer" refer to all compounds that commonly known to the skilled person to fulfill one or more of these functions, including vegetable gums and carbohydrates such as corn starch, acacia, agar agar, carboxymethylcellulose (CMC), ethylcellulose (EC), hydroxyethylcellulose (HEC), hydroxypropyl cellulose (HPC), methylcellulose (MC), alginate, tragacanth, carrageenan, locust bean gum, karaya gum, ghatti gum, gum arabic, xanthan gum, pectin, as well as tetrasodium pyrophosphate and gelatin. The majority of these compounds have been classified with "E-numbers". In a particularly preferred embodiment, the creamer or whitener composition comprises 0 wt% of gelling agents, thickeners and/or stabilizers.

### Inorganic phosphates

It is preferred that the particles of the invention contain less than 0.5 wt%, preferably less than 0.2 wt%, more preferably less than 0.1 wt%, based on dry weight, of inorganic phosphates. Most preferably the particulate composition contains about 0 wt% of inorganic phosphates. Inorganic phosphates commonly applied as buffer in acidic foods are e.g. dipotassium phosphate (K₂HPO₄) and monopotassium phosphate (KH₂PO₄), disodium phosphate (Na₂HPO₄) monosodium phosphate (NaH₂PO₄) and sodium hexametaphosphate ((NaPO₃)₆).

### Bulk density

The particulate or powdery properties may further be characterized by the poured and/or tapped bulk density. It may have a poured bulk density of 350- 650, preferably 400-500, more preferably 425-550 g/L, and/or a tapped bulk density of 450-700, preferably 550-650, more preferably 500-600 g/L. The actual bulk density is largely dependent on the food application. "Bulk density" used herein in connection with the creamer/whitener is determined by measuring the volume that a given weight of the particulates occupies when poured through a funnel into a stationary graduated cylinder. Standardized tests for determining bulk densities are, for instance, provided in ASTMD1895.

### Emulsion/dispersion

The benefits of the invention are particularly pronounced when the particulate creamer or whitener composition according to the invention is emulsified or dispersed in a liquid solvent, preferably water, to provide a solvent-continuous dispersion or emulsion. Such an emulsion or dispersion will display an enhanced shelf-life relative to dispersions/emulsions of creamers of whiteners known in the art, due to the acidic nature of the particulate creamer or whitener composition of the invention. Accordingly, the present invention also pertains a solvent-continuous emulsion or dispersion comprising the creamer or whitener composition of the invention. Such an emulsion may be concentrated, having a concentration of 5-60 wt%, preferably at least 20 wt%, and preferably has a fat:whey protein weight ratio as defined herein above Typically, the concentrated emulsion, comprising fat, protein, carbohydrate and acidulant, is mixed with a liquid acidic food product, such as a soup or sauce.

### Savory food powders

The particulate composition of the invention is particularly suited for incorporation in savory food compositions, in particular dry powdered or granular compositions, such as instant soup and sauce mixes, in order to provide the reconstituted food product with a whitened appearance and/or creamy mouthfeel. Advantageously, the reconstituted food product comprising the creamer or whitener composition of the invention does not suffer from feathering or curdling (aggregation), even near the boiling point of the food product. Such dry powdered or granular compositions may comprise a variety of other ingredients, such as salt, fats, herbs, spices, flavoring ingredients, meat, fish, dried vegetables, and starches or derivatives thereof. In the art, such dry powdered or granular savory compositions are also referred to "dry soup mix", "dry sauce mix", "instant soup mix", "instant sauce mix", "powdered soup base", "powdered sauce base", "soup powder" or "sauce powder".

Accordingly, in another aspect the invention relates to a dry savory food composition comprising the creamer or whitener particulates as described hereinabove. More particularly, the invention pertains to a dry powdered or granular composition comprising a particulate creamer or whitener composition, wherein the particles comprise fat, carbohydrate, whey protein and an acidulant, and wherein the creamer/whitener particles, if reconstituted in demineralized water, a 10 % (w/w) dispersion or solution of said composition in demineralized water has a pH between 3.5 and 6.

Typically the dry powdered or granular composition comprising the acid-stable whitener or creamer of the invention contains at most 8 wt%, preferably at most 5 wt%, more preferably at most 2 wt% of moisture, based on total weight of the dry powdered or granular composition. The dry powdered or granular composition comprising the acid-stable whitener or creamer of the invention contains at least 0 wt%, preferably at least 0.3 wt% of moisture.

The benefits of the invention are particularly appreciated when the reconstituted food product is acidic, i.e. has a pH below 7, more preferably lower than 6.5, more preferably lower than 6.0, most preferably lower than 5.5, in particular less than 5.0. Preferably, the pH of the reconstituted food product is higher than 3.0, more preferably 3.5. In a preferred embodiment, the savory food composition of the invention is an instant tomato soup powder or granulate. In another preferred embodiment, it is a tomato sauce powder or granulate. The savory food composition typically comprises 5-30 wt%, preferably 10-25 wt%, based on total weight of the composition, of the particulate whitener or creamer composition of the invention. In such case, the particulate creamer/whitener composition of the invention is preferably still present as separate particles within the savory food composition, and can as such be distinguished from the other ingredients, e.g. salt, vegetable powder, flavoring ingredients etc., of said savory food composition. The invention furthermore relates to a method for preparing a dry powdered or granular composition as described hereinabove, comprising mixing the particulate creamer or whitener composition of the invention with one or more other ingredients chosen from salt, fats, herbs, spices, flavoring ingredients, meat, fish, dried vegetables, and starches or derivatives thereof.

### Liquid or pasty food products

The particulates according to the invention are suitably applied in liquid or pasty products, preferably savory products in which a creaming and/or whitening effect is desired. Such liquid or pasty products usually contain water, and on incorporation of the particulate composition according to the invention in such liquid or pasty products the particulates will generally melt and/or dissolve, and no longer be visible as such. The beneficial effects are particularly pronounced if the food product has a pH ranging from 3 - 7, more preferably lower than 6.5, more preferably lower than 6.0, most preferably lower than 5.5, in particular less than 5.0. Preferably, the pH of the food product is higher than 3.0, more preferably 3.5.

Examples of such liquid or pasty products are wet soups and sauces, in particular soups and sauces having a low pH such as tomato soup and tomato-based sauces. Hence, the present invention further relates to a process for preparing a liquid or pasty sauce, soup or concentrate of such a sauce or soup, which process includes the step of including 0.1-65 wt%, preferably 2-50 wt% of the particulate composition according to the invention in such liquid or pasty sauce, soup or concentrate of such a sauce or soup. The invention also relates to a liquid or pasty sauce, soup or liquid or pasty concentrate of such a sauce or soup comprising the particulate creamer-whitener composition according to the invention.

In another aspect, the invention pertains to the use of the composition of the invention as a creamer or whitener in a savory dry, pasty or liquid food composition. Preferably, this dry, pasty or liquid food composition is a soup or sauce, or base for a soup or sauce.

### Use as whitener/creamer

The present invention also relates to a method for providing a foodstuff or a beverage with a creamy appearance and/or mouthfeel, and/or a white or whiter appearance, comprising the step of adding the composition of the invention to said foodstuff or beverage. In a preferred embodiment, said method comprises adding 0.1-65 wt%, preferably 2-50 wt%, more preferably 3-30 wt%, most preferably 5-25 wt%, based on total weight of the foodstuff or beverage, of the creamer/whitener composition of the invention to said beverage or foodstuff. In one embodiment, the foodstuff and beverage together with the composition of the invention may be packaged together, for future use.

In another preferred embodiment, the foodstuff or beverage in the above method has a temperature exceeding room temperature, preferably higher than 25 °C, more preferably higher than 30 °C, even more preferably higher than 40 °C, yet even more preferably higher than 50 °C, most preferably higher than 60 °C, either at the time of adding or in a subsequent heating step.

In one embodiment, the method pertains to a method for providing a beverage with a creamy appearance and/or mouthfeel, and/or a white or whiter appearance, wherein said beverage is chosen from hot chocolate, tea or coffee, including cappuccino, café latte, latte macchiato and the like. In another embodiment, the method pertains to a method for providing a hot soup or sauce with a creamy appearance and/or mouthfeel, and/or a white or whiter appearance, comprising the addition of the composition of the invention to said soup or sauce.

It is preferred that the foodstuff or beverage comprises less than 80 wt%, preferably less than 70 wt%, more preferably less than 60 wt%, even more preferably less than 50 wt%, yet even more preferably less than 30 wt%, most preferably less than 15 wt% of milk and/or cream, based on total weight of the foodstuff or beverage. In one embodiment, the foodstuff or beverage does not consist of milk or water.

### Method of preparation

The invention furthermore pertains to a process for the preparation of a particulate creamer or whitener composition comprising fat, protein, acidulant and carbohydrate, comprising the steps of
i. Providing a, preferably aqueous, solution of whey protein and optional other water soluble components, having a concentration of water-soluble components of 5-60 wt% and a temperature of at most 55 °C, preferably at most 45°C;
ii. Adding a fat source to the solution and maintaining or increasing the temperature to at least 55 °C and at most 65°C and mix to obtain a pre-emulsion;
iii. Adjusting the pH of the pre-emulsion to a value of 3.5-6.0 using an acidulant;
iv. Homogenizing the pre-emulsion in a homogenization step at a temperature between 55°C and 65° C at a pressure of 30-100 bar, preferably 40-60 bar to obtain an emulsion;
v. Spray-drying the emulsion using at a nozzle pressure of 30-100 bar, preferably 40-60 bar.

This process yields the particulate creamer/whitener composition as described in detail herein before. Preferably, the concentration of the solution of step i. is at most 50%, more preferably at most 40%. The total protein content of the solution of step i. is preferably 1-10 wt%, based on total weight of the solution. In one preferred embodiment, the solution in step (i) comprises less than 2 wt% fat, more preferably less than 1 wt% fat, most preferably no fat at all. As such, the whey protein source for step i. may still comprise minor amounts of fat.

It is preferred that in preparing the emulsion for spray-drying, the fat:whey protein ratio in the emulsion is, based on weight, larger than 6:1, preferably larger than 7:1, more preferably larger than 8:1, even more preferably larger than 9:1, yet even more preferably larger than 10:1, most preferably larger than 12:1. It is furthermore preferred that the fat : whey protein ratio in the emulsion, based on weight, is smaller than 15:1.

It is preferred that the fat source is heated, or melted, to a temperature above 45 °C, but lower than 65 °C prior to combining it with the solution of step i. Homogenization is preferably performed as a single-stage homogenization. Furthermore, homogenization is preferably carried out at a pressure of 40-60 bar. In a particularly preferred embodiment, homogenization is carried out in a single-stage homogenizer at a pressure of about 50 bar.

Preferred pH settings in step iii. are from 3.7-5.9, more preferably 4.2-5.7. Even more preferably the pH is adjusted in step iii. to 4.6 - 5.5, as in these ranges the whiteness and aggregation properties of the particulate composition are hardly adversely affected by the homogenisation and spray drier nozzle pressure.

The transportation of the pre-emulsion and emulsion in steps i - iii up to the spray dry step v is preferably carried out using a pump, e.g. a centrifugal or lobe pump, more preferably a lobe pump, as with these type of pumps the best performance in terms of final whitening power and minimal aggregation in the final food application was observed.

Steps i to v are generally performed over a time period of less than 1 hour. Typically, the time scale of dissolution of the protein to the end of the spray-drying is about 30 - 45 minutes.

After spray drying, a post-drying step may be carried out, preferably using a band filter or mat/grid. In a particularly preferred embodiment the spray drying and post-drying step are carried out in one device, such as in a so-called Filtermat type dryer, which is well known in the art.

In this process, it is preferred that the fat source is milk fat, preferably butter fat, the carbohydrate source is lactose and the protein source is whey protein. Preferred types, amounts and concentrations of the fat, protein, carbohydrate are as provided in detail herein before for the composition according to the invention.

In a particularly preferred embodiment, the particulate creamer or whitener composition contains no other fat, carbohydrate and protein sources than butter oil, lactose and whey protein, respectively.

The process produces a free-flowing creamer or whitener consisting of a matrix comprising fat, protein, acidulant and carbohydrate as described herein before.

The benefits of the invention can be obtained using a wide variety of acidulants for obtaining the desired pH of the spray-drying emulsion/dispersion. These acidulants have been described in detail herein above. Preferably, lactic acid or citric acid, most preferably lactic acid is applied.

### EXAMPLES

### Example 1: Preparation of creamer/whitener powders

An emulsified, spray dried fat powder was prepared containing 60 wt% anhydrous butter fat (FrieslandCampina, the Netherlands), 7 wt% WPC 80 (Textrion Progel 800, FrieslandCampina DMV, the Netherlands), and 33 wt% lactose (FrieslandCampina, the Netherlands).

5.25 kg of WPC 80 and 24.874 kg of lactose were dissolved in 74.8 kg of water of 45 C in a 200 liter Terlet Tank. Next, 45 kg of melted butterfat (65 °C) was added to the water phase under stirring. The temperature was then increased to 60° C while stirring. Citric acid (1 M aqueous solution) was added until a pH of 5.2 was reached.

The so formed pre-emulsion was transferred to a second Terlet tank using a centrifuge pump (Alfa-Laval). The pre-emulsion was then transferred to a homogenizer (NIRO NS3011MA) using a lobe pump (POMAC, PLP 1-1), and homogenization was carried out at 50 bar and 60° C.

After homogenization, the emulsion was transferred to a pasteurizer using a lobe pump, and pasteurized at 66° C (approx. 10 seconds). Then the pasteurized emulsion was spray dried on a spray drier of the Filtermat type (nozzle pressure 50 Bar, inlet temperature 140° C, outlet temperature 80° C).

A 10 wt.% solution in demineralized water of the powder thus obtained had a pH of 5.1.

Additional particulate creamer/whitener compositions were prepared following the same procedure, wherein the following parameters were varied: pH of the initial pre-emulsion; type of acid; amounts of protein and fat (fat:whey protein ratio); type of fat, acidulant or carbohydrate; homogenization pressure; spray nozzle pressure.

### Example 2: Free fat determination

10,0 g (A) of the creamer/whitener composition of the invention was weighted into a 300 ml flat bottom flask. 50 ml of petroleum ether was added. The mixture was shaken for 1 minute using an orbital shaker (KS 260 control, IKA) adjusted at 310 rpm. The mixture was then rested for 15 minutes. The clear petroleum ether was filtered over a paper filter (Ø 150 mm (Schleier & Shull) into a round bottom flask with a known weight (B). Again add 50 ml petroleum ether was added to the flat bottom flask. This mixture was shaken for 1 minute at 310 rpm and rested for 5 minutes. The whole content of the flat bottom flask was filtered over the same paper filter into the round bottom flask. The petroleum ether was evaporated using a rotation evaporator (Labo-Rato S 300 Y , 45°C). The round bottom flask was then put in a drying chamber for 10 minutes at 100°C to evaporate the last traces of petroleum ether and cooled down in an exsiccator (silicagel). The round bottom flask was weighted (C) and the free fat content was calculated as follows: Free fat content (%) = (C-B)x100/A. The experiment was repeated twice and the results were averaged.

### Example 3: Creamer/whitening powder

The powders were tested in a hot tomato soup application. The following ingredients were separately dry mixed:

| | |
|---|---|
| Instant Starch PA90 (FrieslandCampina, Kievit) | 25 wt% |
| Tomato powder (DFT Kolham) | 25 wt% |
| Maltodextrin (Maldex) | 9.3 wt% |
| Stock powder (Knorr Aromat) | 12 wt% |
| Onion powder (DFT Kolham) | 2 wt% |
| Chives (DFT Kolham) | 1.3 wt% |
| Salt | 2 wt% |
| Sucrose | 1.5 wt% |
| Yeast extract (Maxarome, DSM) | 1.0 wt% |
| Beef extract (Plantex MBE 331, DSM) | 0.6 wt% |
| Black pepper | 0.3 wt% |
| Creamer/whitener of Ex. 1 | 20 wt% |

To 15 grams of this dry mix 140 ml of boiling tap water was added in a 200 ml glass beaker. The solution was stirred six full turns with a tablespoon and then judged on visual appearance. The whiteness and the degree of aggregation in the soup were assessed visually. Whiteness value was expressed on a scale of 0 (glazy) to 5 (white), wherein a value of 3 or higher was considered acceptable. Aggregation was expressed on a scale of 0 (no aggregation) to 5 (highly aggregated), wherein a value of 3 or lower was considered acceptable.

The results of Examples 1-3 are summarized in Table 1.

**Table 1. Composition, manufacturing and properties of particulate creamer-whitener compositions**

| **nr.** | **fat** | **acid** | **carbohydrate** | **homogen. pressure (bar)** | **spray-dry (pressure (bar)** | **wt% carbo-hydrate** | **wt% whey protein** | **wt% fat** | **wt% free fat** | **fat:whey protein ratio** | **pH before drying** | **pH 10% solution in demi water** | **pH in tomato soup** | **aggregation 0=aggr. 5=no aggr.** | **whitening 1=poor 5=good** |
|---|---|---|---|---|---|---|---|---|---|---|---|---|---|---|---|
| 1 | butterfat | HCl | lactose | 50/0 | 50 | 35.1 | 6.1 | 58.8 | 31.6 | 9.6 | 4.2 | 3.93 | 4.64 | 2 | 3 |
| 2 | butterfat | H₃PO₄ | lactose | 50/0 | 50 | 34.5 | 6.2 | 59.3 | 31.2 | 9.6 | 4.2 | 3.89 | 4.67 | 2 | 3 |
| 3 | butterfat | lactic | lactose | 50/0 | 50 | 36.5 | 6.2 | 57.3 | 31.3 | 9.2 | 4.2 | 3.83 | 4.66 | 4 | 4 |
| 4 | butterfat | citric | lactose | 50/0 | 50 | 31.5 | 6.4 | 62.1 | 44.2 | 9.7 | 4.2 | 5.42 | 4.7 | 4 | 4 |
| 5 | butterfat | citric | lactose | 50/0 | 100 | 34.1 | 6.1 | 59.8 | 37.3 | 9.8 | 4.2 | 4.18 | 4.63 | 2 | 3 |
| 6 | butterfat | citric | lactose | 100/0 | 100 | 38.2 | 6.3 | 55.5 | 16.9 | 8.8 | 4.2 | 4.09 | 4.63 | 2 | 3 |
| 7 | butterfat | citric | lactose | 100/0 | 50 | 30.7 | 6.1 | 63.2 | 45.7 | 10.4 | 4.2 | 4.35 | 4.74 | 3 | 4 |
| 8 | butterfat | citric | lactose | 50/0 | 50 | 32.7 | 6.3 | 61 | 35.8 | 9.7 | 3.7 | 3.93 | 4.62 | 4 | 3 |
| 9 | butterfat | citric | lactose | 50/0 | 50 | 31.5 | 6.4 | 62.1 | 44.2 | 9.7 | 4.2 | 4.42 | 4.7 | 4 | 4 |
| 10 | butterfat | citric | lactose | 50/0 | 50 | 42.7 | 8.3 | 49 | 22.2 | 5.9 | 4.7 | 5.77 | 4.75 | 1 | 2 |
| 11 | butterfat | citric | lactose | 50/0 | 50 | 36.4 | 6.7 | 56.9 | 16 | 8.5 | 5.2 | 5.05 | 4.72 | 5 | 5 |
| 12 | butterfat | citric | lactose | 50/0 | 50 | 36 | 6.1 | 57.9 | 10.1 | 9.5 | 5.7 | 5.47 | 4.77 | 5 | 5 |
| 13 | butterfat | citric | lactose | 50/0 | 50 | 36 | 6.1 | 57.9 | 8.4 | 9.5 | 6.2 | 6 | 4.78 | 0 | 1 |
| 14 | butterfat | citric | lactose | 50/0 | 50 | 31.8 | 7.1 | 61.1 | 8.9 | 8.6 | 6.4 | 6.12 | 4.74 | 0 | 1 |
| 15 | coconut fat | citric | lactose | 50/0 | 50 | 60.2 | 6.2 | 33.6 | 9.6 | 5.4 | 4.2 | 4.16 | 4.5 | 1 | 3 |
| 16 | butterfat | citric | lactose | 50/0 | 50 | 33.6 | 6.2 | 60.2 | 14.7 | 9.7 | 5.2 | 5.04 | 4.5 | 5 | 5 |
| 17 | butterfat | citric | lactose | 50/0 | 100 | 33.7 | 6.1 | 60.2 | 12.6 | 9.9 | 5.2 | 5.08 | 4.47 | 4 | 5 |
| 18 | butterfat | citric | lactose | 100/0 | 50 | 33.7 | 6.3 | 60 | 11 | 9.5 | 5.2 | 5.15 | 4.44 | 5 | 5 |
| 19 | butterfat | citric | lactose | 100/0 | 100 | 33.2 | 6.3 | 60.5 | 14.7 | 9.6 | 5.2 | 5.05 | 4.47 | 5 | 5 |
| 20 | butterfat | citric | lactose | 50/0 | 50 | 33.4 | 6.1 | 60.5 | 9.8 | 9.9 | 5.7 | 5.4 | 4.5 | 5 | 5 |
| 21 | butterfat | citric | lactose | 50/0 | 100 | 33.2 | 6.1 | 60.7 | 9.1 | 10.0 | 5.7 | 5.6 | 4.41 | 2 | 3 |
| 22 | butterfat | citric | lactose | 100/0 | 50 | 32.9 | 6.4 | 60.7 | 6.6 | 9.5 | 5.7 | 5.6 | 4.45 | 2 | 3 |
| 23 | butterfat | citric | lactose | 100/0 | 100 | 33.4 | 6.3 | 60.3 | 8.4 | 9.6 | 5.7 | 5.6 | 4.45 | 1 | 3 |
| 24 | butterfat | citric | lactose | 50/0 | 50 | 34.1 | 5.3 | 60.6 | 12.3 | 11.4 | 5.2 | 5.01 | 4.47 | 5 | 5 |
| 25 | butterfat | citric | lactose | 50/0 | 100 | 34 | 5.4 | 60.6 | 11.6 | 11.2 | 5.2 | 5.02 | 4.43 | 5 | 5 |
| 26 | butterfat | citric | lactose | 100/0 | 50 | 33.9 | 5.8 | 60.3 | 11.6 | 10.4 | 5.2 | 5.02 | 4.47 | 4 | 4 |
| 27 | butterfat | citric | lactose | 100/0 | 100 | 34.4 | 5.6 | 60 | 9.7 | 10.7 | 5.2 | 5.02 | 4.5 | 1 | 3 |
| 28 | butterfat | citric | lactose | 50/0 | 50 | 33.9 | 5.2 | 60.9 | 14.7 | 11.7 | 5.2 | 5.08 | 4.5 | 4 | 4 |
| 29 | butterfat | citric | lactose | 50/0 | 100 | 34.1 | 5.2 | 60.7 | 11.6 | 11.7 | 5.2 | 5.08 | 4.42 | 4 | 4 |
| 30 | butterfat | citric | lactose | 100/0 | 50 | 34.2 | 5.3 | 60.5 | 10.3 | 11.4 | 5.2 | 5.03 | 4.47 | 5 | 5 |
| 31 | butterfat | citric | lactose | 100/0 | 100 | 34 | 5.4 | 60.6 | 10.1 | 11.2 | 5.2 | 5.05 | 4.47 | 4 | 5 |
| 32 | butterfat | citric | lactose | 50/0 | 50 | 33.9 | 5.2 | 60.9 | 10.1 | 11.7 | 5.2 | 5.04 | 4.46 | 4 | 4 |

## Claims

1. Particulate creamer or whitener composition, wherein the particles comprise fat, carbohydrate, whey protein and an acidulant, and wherein, if reconstituted in demineralized water, a 10 % (w/w) dispersion or solution of said composition in demineralized water has a pH between 3.5 and 6.0, wherein the creamer or whitener particles contain at most 10 wt%, more preferably at most 5 wt%, most preferably at most 1 wt%, by total weight of the protein fraction, of casein and/or caseinate.

2. Composition according to claim 1, wherein if reconstituted in demineralized water, a 10 % (w/w) dispersion or solution of said composition in demineralized water has a pH between 3.9 and 5.9, preferably between 4.7 -5.7, more preferably between 5.0 - 5.4.

3. Composition according to claim 1 or 2, wherein the fat:whey protein ratio, based on weight, is larger than 6:1, preferably larger than 7:1, more preferably larger than 8:1, even more preferably larger than 9:1, yet even more preferably larger than 10:1, most preferably larger than 12:1, and is smaller than 15:1.

4. Composition according to any one of the preceding claims, comprising 10-50 wt% free fat, based on total dry weight of the composition.

5. Composition according to any one of the preceding claims, comprising at least 30 wt%, preferably at least 40 wt%, more preferably at least 50 wt% fat, most preferably at least 55 wt% fat, preferably milk fat, based on total dry weight of the composition.

6. Composition according to any one of the preceding claims, comprising less than 2 wt%, preferably less than 1 wt%, more preferably less than 0.5 wt%, most preferably 0 wt%, based on total dry weight of the composition, ingredients that cannot be derived from a dairy source.

7. Composition according to any one of the preceding claims, comprising milk fat as fat source, lactose as carbohydrate source and whey protein as protein source, preferably as the only sources of fat, carbohydrate and protein.

8. Composition according to any one of the preceding claims, containing less than 0.5 wt% inorganic phosphates, based on total dry weight of the composition.

9. Composition according to any one of the preceding claims, comprising less than 1 wt%, more preferably less than 0.5 wt%, even more preferably less than 0.1 wt%, based on dry weight on weight of the particulate composition, of gelling agents, thickeners and/or stabilizers.

10. Dry powdered or granular composition comprising the particulate creamer or whitener composition according to any one of the preceding claims.

11. Soup or sauce, or concentrate for such a soup or sauce having a pH of 3.5-6.0, to which the composition according to any one of claims 1-9 has been added.

12. Process for the preparation of a particulate creamer or whitener composition according to any one of claims 1-9, comprising the steps of
i. Providing a, preferably aqueous, solution of whey protein and optional other water soluble components, having a concentration of water-soluble components of 5-60 wt% and a temperature of at most 55 °C, preferably at most 45°C;
ii. Adding a fat source to the solution and maintaining or increasing the temperature to at least 55 °C and at most 65°C and mix to obtain a pre-emulsion;
iii. Adjusting the pH of the pre-emulsion to a value of 3.5-6.0 using an acidulant;
iv. Homogenizing the pre-emulsion in a homogenization step at a temperature between 55°C and 65° C at a pressure of 30-100 bar, preferably 40-60 bar to obtain an emulsion;
v. Spray-drying the emulsion using at a nozzle pressure of 30-100 bar, preferably 40-60 bar.

13. Method for providing a foodstuff or a beverage with a creamy appearance and/or mouthfeel, and/or a white or whiter appearance, comprising the step of adding the composition according to any one of claims 1-9 to said foodstuff or beverage.

14. Method according to claim 13, wherein said foodstuff or beverage and the composition according to any one of claims 1-9 are packaged together, for future use.

15. Use of the composition of claims 1-9 as a creamer or whitener in a dry, pasty or liquid sauce or soup composition.

## Patentansprüche

1. Teilchenförmige Sahne- oder Weißerzusammensetzung, wobei die Teilchen Fett, Kohlenhydrat, Molkenprotein und ein Säuerungsmittel umfassen und wobei nach Rekonstitution in demineralisiertem Wasser eine 10%-ige (w/w) Dispersion oder Lösung der Zusammensetzung in demineralisiertem Wasser einen pH-Wert zwischen 3,5 und 6,0 aufweist, wobei die Sahne- oder Weißerteilchen höchstens 10 Gew.-%, besonders bevorzugt höchstens 5 Gew.-%, am meisten bevorzugt höchstens 1 Gew.-%, des Gesamtgewichts der Proteinfraktion von Casein und/oder Caseinat enthalten.

2. Zusammensetzung gemäß Anspruch 1, wobei nach Rekonstitution in demineralisiertem Wasser eine 10%-ige (w/w) Dispersion oder Lösung der Zusammensetzung in demineralisiertem Wasser einen pH-Wert zwischen 3,9 und 5,9, vorzugsweise zwischen 4,7 und 5,7, besonders bevorzugt zwischen 5,0 und 5,4, aufweist.

3. Zusammensetzung gemäß Anspruch 1 oder 2, wobei das gewichtsbezogene Verhältnis von Fett:Molkenprotein größer als 6:1, vorzugsweise größer als 7:1, besonders bevorzugt größer als 8:1, ganz besonders bevorzugt größer als 9:1, ganz besonders bevorzugt größer als 10:1, am meisten bevorzugt größer als 12:1 ist und kleiner als 15:1 ist.

4. Zusammensetzung gemäß einem der vorstehenden Ansprüche, die 10-50 Gew.-% freies Fett umfasst, bezogen auf das Gesamttrockengewicht der Zusammensetzung.

5. Zusammensetzung gemäß einem der vorstehenden Ansprüche, die wenigstens 30 Gew.-%, vorzugsweise wenigstens 40 Gew.-%, besonders bevorzugt wenigstens 50 Gew.-%, am meisten bevorzugt wenigstens 55 Gew.-% Fett, vorzugsweise Milchfett, umfasst, bezogen auf das Gesamttrockengewicht der Zusammensetzung.

6. Zusammensetzung gemäß einem der vorstehenden Ansprüche, die weniger als 2 Gew.-%, vorzugsweise weniger als 1 Gew.-%, besonders bevorzugt weniger als 0,5 Gew.-%, am meisten bevorzugt 0 Gew.-%, bezogen auf das Gesamttrockengewicht der Zusammensetzung, an Bestandteilen, die nicht aus einer Milchproduktquelle stammen können, umfasst.

7. Zusammensetzung gemäß einem der vorstehenden Ansprüche, die Milchfett als Fettquelle, Lactose als Kohlenhydratquelle und Molkenprotein als Proteinquelle, vorzugsweise als einzige Quellen für Fett, Kohlenhydrat und Protein, umfasst.

8. Zusammensetzung gemäß einem der vorstehenden Ansprüche, die weniger als 0,5 Gew.-% anorganische Phosphate enthält, bezogen auf das Gesamttrockengewicht der Zusammensetzung.

9. Zusammensetzung gemäß einem der vorstehenden Ansprüche, die weniger als 1 Gew.-%, besonders bevorzugt weniger als 0,5 Gew.-%, ganz besonders bevorzugt weniger als 0,1 Gew.-%, bezogen auf das Trockengewicht der teilchenförmigen Zusammensetzung, an Geliermitteln, Verdickern und/oder Stabilisatoren umfasst.

10. Trockene pulverige oder körnige Zusammensetzung, die die teilchenförmige Sahne- oder Weißerzusammensetzung gemäß einem der vorstehenden Ansprüche umfasst.

11. Suppe oder Soße oder Konzentrat für eine solche Suppe oder Soße mit einem pH-Wert von 3,5 bis 6,0, zu der oder dem die Zusammensetzung gemäß einem der Ansprüche 1 bis 9 hinzugefügt wurde.

12. Verfahren zur Herstellung einer teilchenförmigen Sahne- oder Weißerzusammensetzung gemäß einem der Ansprüche 1 bis 9, umfassend die Schritte:
i. - Bereitstellen einer, vorzugsweise wässrigen, Lösung von Molkenprotein und optionalen anderen wasserlöslichen Komponenten, die eine Konzentration an wasserlöslichen Komponenten von 5-60 Gew.-% und eine Temperatur von höchstens 55 °C, vorzugsweise höchstens 45 °C, aufweist;
ii. - Hinzufügen einer Fettquelle zu der Lösung und Aufrechterhalten oder Erhöhen der Temperatur auf wenigstens 55 °C und höchstens 65 °C und Mischen, wobei man eine Voremulsion erhält;
iii. Einstellen des pH-Werts der Voremulsion auf einen Wert von 3,5 bis 6,0 unter Verwendung eines Säuerungsmittels;
iv. Homogenisieren der Voremulsion in einem Homogenisierungsschritt bei einer Temperatur zwischen 55 °C und 65 °C und einem Druck von 30-100 bar, vorzugsweise 40-60 bar, wobei man eine Emulsion erhält;
v. Sprühtrocknen der Emulsion unter Verwendung eines Düsendrucks von 30-100 bar, vorzugsweise 40-60 bar.

13. Verfahren zum Versehen eines Lebensmittels oder Getränks mit einem cremigen Erscheinungsbild und/oder Mundgefühl und/oder einem weißen oder weißeren Erscheinungsbild, umfassend den Schritt des Hinzufügens der Zusammensetzung gemäß einem der Ansprüche 1 bis 9 zu dem Lebensmittel oder Getränk.

14. Verfahren gemäß Anspruch 13, wobei das Lebensmittel oder Getränk und die Zusammensetzung gemäß einem der Ansprüche 1 bis 9 zur späteren Verwendung zusammen verpackt sind.

15. Verwendung der Zusammensetzung gemäß den Ansprüchen 1 bis 9 als Sahne oder Weißer in einer trockenen, pastösen oder flüssigen Soßen- oder Suppenzusammensetzung.

## Revendications

1. Composition crémeuse ou de blanchiment sous forme de particules, les particules comprenant des matières grasses, des glucides, des protéines de lactosérum et un acidulant, et, une fois reconstituée dans de l'eau déminéralisée, une dispersion ou solution à 10% (p/p) de ladite composition dans de l'eau déminéralisée a un pH compris entre 3,5 et 6,0, les particules de crème ou de blanchiment contenant au plus 10% en poids, de préférence au plus 5% en poids, de manière préférée au plus 1% en poids, de caséine et/ou de caséinate, par rapport au poids total de la fraction protéique.

2. Composition selon la revendication 1, une fois reconstituée dans de l'eau déminéralisée, une solution ou dispersion à 10% (p/p) de ladite composition dans de l'eau déminéralisée a un pH compris entre 3,9 et 5,9, préférablement entre 4,7 et 5,7, plus préférablement entre 5,0 et 5,4.

3. Composition selon la revendication 1 ou 2, le rapport en poids matières grasses: protéines de lactosérum étant supérieur à 6:1, préférablement supérieur à 7:1, plus préférablement supérieur à 8:1, encore plus préférablement supérieur à 9:1, et encore plus préférablement supérieur à 10:1, de manière préférée supérieur à 12:1, et inférieur à 15:1.

4. Composition selon l'une quelconque des revendications précédentes, comprenant 10 à 50% en poids de matières grasses libres, par rapport au poids sec total de la composition.

5. Composition selon l'une quelconque des revendications précédentes, comprenant au moins 30% en poids, de préférence au moins 40% en poids, plus préférablement au moins 50% en poids de matières grasses, encore plus préférablement au moins 55% en poids de matières grasses, de préférence de matières grasses du lait, par rapport au poids sec total de la composition.

6. Composition selon l'une quelconque des revendications précédentes, comprenant moins de 2% en poids, de préférence moins de 1% en poids, plus préférablement moins de 0,5% en poids, le plus préférablement 0% en poids, par rapport au poids sec total de la composition, d'ingrédients qui ne proviennent pas de produits laitiers.

7. Composition selon l'une quelconque des revendications précédentes, comprenant des matières grasses du lait comme source de matières grasses, du lactose comme source de glucides et des protéines de lactosérum comme source de protéines, de préférence comme seules sources de matières grasses, de glucides et de protéines.

8. Composition selon l'une quelconque des revendications précédentes, contenant moins de 0,5% en poids de phosphates inorganiques, par rapport au poids sec total de la composition.

9. Composition selon l'une quelconque des revendications précédentes, comprenant moins de 1% en poids, plus préférablement moins de 0,5% en poids, encore plus préférablement moins de 0,1% en poids, par rapport au poids sec sur le poids de la composition sous forme de particules, d'agents gélifiants, d'agents épaississants et/ou d'agents stabilisants.

10. Composition granulaire ou pulvérulente sèche comprenant la composition crémeuse ou de blanchiment sous forme de particules selon l'une quelconque des revendications précédentes.

11. Soupe ou sauce, ou concentré pour une telle soupe ou sauce ayant un pH de 3,5-6,0, à laquelle a été ajoutée la composition selon l'une quelconque des revendications 1 à 9.

12. Procédé de préparation d'une composition crémeuse ou de blanchiment sous forme de particules selon l'une quelconque des revendications 1 à 9, comprenant les étapes consistant à
i. fournir une solution, de préférence aqueuse, de protéines de lactosérum et d'autres composés hydrosolubles facultatifs, ayant une concentration de composés hydrosolubles de 5-60% en poids et une température d'au plus 55°C, de préférence d'au plus 45°C ;
ii. ajouter une source de matières grasses à la solution et maintenir ou augmenter la température à au moins 55°C et au plus 65°C et mélanger pour obtenir une pré-émulsion ;
iii. ajuster le pH de la pré-émulsion à une valeur de 3,5-6,0 à l'aide d'un acidulant ;
iv. homogénéiser la pré-émulsion dans une étape d'homogénéisation à une température comprise entre 55°C et 65°C à une pression de 30-100 bars, de préférence de 40-60 bars pour obtenir une émulsion ;
v. sécher par pulvérisation l'émulsion à une pression de buse de 30-100 bars, de préférence de 40-60 bars.

13. Procédé pour produire un aliment ou une boisson ayant une apparence et/ou sensation en bouche crémeuse, et/ou un aspect blanc ou plus blanc, comprenant l'étape consistant à ajouter la composition selon l'une quelconque des revendications 1 à 9 audit produit alimentaire ou à ladite boisson.

14. Procédé selon la revendication 13, dans lequel ledit produit alimentaire ou ladite boisson et la composition selon l'une quelconque des revendications 1 à 9 sont emballés ensemble en vue d'une utilisation future.

15. Utilisation de la composition des revendications 1 à 9 comme crème ou agent de blanchiment dans une composition de sauce ou de soupe sèche, pâteuse ou liquide.
